# EUROPEAN PATENT APPLICATION

(11) **EP 4 779 917 A1**
(43) Date of publication of application: **22.07.2026**
(21) Application number: 24864526.9
(22) Date of filing: 05.09.2024
(51) Int. Cl.: H04L 5/00

(54) **TRANSMISSION METHOD AND APPARATUS, TERMINAL, AND NETWORK DEVICE**

(30) Priority: 11.09.2023 CN 202311164935
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100032 (CN)
(74) Representative: Herrero & Asociados, S.L.
(86) International application number: PCT/CN2024/117041
(87) International publication number: WO 2025/055806

(57) **Abstract**

Provided in the present disclosure are a transmission method and apparatus, a terminal, and a network device. The method comprises: after a cell activation command, sending a first report to a network; and/or sending first information to the network, the first information being related to a beam; and/or determining a first time, the first time being related to cell activation.

## Description

### CROSS-REFERENCE TO RELATED APPLICATIONS

The present application claims priority to Chinese Patent Application No. 202311164935.9, filed on September 11, 2023 in China, the entire contents of which are incorporated herein by reference.

### TECHNICAL FIELD

The present disclosure relates to the field of wireless technologies, and in particular, to a transmission method, an apparatus, a terminal, and a network device.

### BACKGROUND

Long Term Evolution (LTE) systems have introduced carrier aggregation technology, which enables a terminal (e.g., User Equipment, UE) to communicate with the network through multiple cells, one of which is a Primary Cell (PCell) and the others are Secondary Cells (SCells). Specifically, a secondary cell (or secondary carrier) in carrier aggregation is activated after receiving an activation command.

The activation time of a cell refers to a duration or time period from when the terminal receives the activation command to when the terminal transmits a Channel State Information (CSI) report. During this activation time, processes such as Hybrid Automatic Repeat Request (HARQ) feedback, Automatic Gain Control (AGC), synchronization, Layer 1 measurement, and reporting typically need to be performed. As a result, the activation time of a cell involves multiple steps, and the duration or time period of each step may be relatively long, leading to prolonged cell activation delay. This may further result in failure to complete cell activation in a timely manner, thereby affecting system performance.

### SUMMARY OF THE DISCLOSURE

The purpose of the technical solutions of the present disclosure is to provide a transmission method, an apparatus, a terminal, and a network device, which are configured to reduce cell activation delay, avoid failure to complete cell activation in a timely manner due to excessively long cell activation delay, and prevent impacts on system performance.

Some embodiments of the present disclosure provide a transmission method applied to a terminal. The method includes:
after a cell activation command, sending a first report to a network; and/or
sending first information to the network, where the first information is related to beam; and/or determining a first time, where the first time is related to cell activation.

In some embodiments, in the method, the first report comprises a SCell measurement report.

In some embodiments, the method further includes:
receiving second information sent by the network;
where the second information is configured to instruct the terminal to send the first report after receiving the cell activation command; or, the second information is configured to instruct the terminal not to send the first report after receiving the cell activation command; or, the second information is configured to trigger the terminal to send the first report.

In some embodiments, in the method, the first report comprises one or more of measurement results, a beam index, and a cell index.

In some embodiments, in the method, the receiving second information sent by the network comprises one of the following:
receiving the cell activation command sent by the network, where the cell activation command is the second information;
receiving the cell activation command sent by the network, where the cell activation command comprises the second information; and
receiving a first command sent by the network before or after the network sends the cell activation command, where the first command comprises the second information.

In some embodiments, in the method, in a case where the cell activation command is the second information, the cell activation command is configured to instruct the terminal to send the first report after receiving the cell activation command.

In some embodiments, in the method, in a case where the cell activation command includes the second information, a preset bit in the cell activation command is configured to indicate the second information, and
in a case where the second information is a first value, the second information is configured to instruct the terminal to send the first report; and/or
in a case where the second information is a second value, the second information is configured to instruct the terminal not to send the first report.

In some embodiments, in the method, in a case where the cell activation command includes the second information, N bits in the cell activation command are configured to indicate the second information; each bit corresponds to a cell index and is configured to instruct the terminal whether the terminal needs to send the first report for a cell corresponding to the cell index; where N is an integer greater than or equal to 1.

In some embodiments, in the method, in a case where the cell activation command comprises the second information, the cell activation command comprises a cell index and a preset bit corresponding to the cell index; the preset bit is configured to indicate the second information, and the second information is configured to instruct that the terminal needs to send the first report or does not need to send the first report for a cell corresponding to the cell index.

In some embodiments, in the method, in a case where the first command includes the second information, the second information includes a cell index for sending the first report and/or first report sending indication information.

In some embodiments, the method further includes:
sending third information and/or fourth information to the network;
where the third information comprises one or more of the following:
   the terminal supports secondary cell activation time reduction; and
   the terminal performs the secondary cell activation time reduction;
where the fourth information comprises one or more of the following:
   information indicating that the terminal has a measurement result; and
   a cell identifier.

In some embodiments, in the method, the sending the first report to the network comprises:
sending the first report to the network in a case where a first condition is satisfied; where the first condition comprises one or more of the following:
measurement performed within a first time period before receiving the cell activation command;
measurement performed within a second time period after receiving the cell activation command;
measurement performed within a third time period before sending a Channel State Information (CSI) report;
measurement satisfies an accuracy requirement; and
measurement satisfies a measurement period.

In some embodiments, in the method, the first information includes one or more of the following:
the terminal supports a factor less than 8;
the terminal supports a factor less than 8 for cell detection;
the terminal supports a factor less than 8 for L1 measurement;
a first value, where the first value indicates the value of a factor for cell detection; and
a second value, where the second value indicates the value of a factor for L1 measurement.

In some embodiments, in the method, after the sending the first report, a SCell activation time of the terminal includes at least: 3 ms and/or a time period between an activation command and a command for Transmission Configuration Indicator (TCI).

In some embodiments, in the method, a SCell activation time of the terminal includes at least one of the following:
the factor, or the first value, or the second value, multiplied by a Synchronization Signal/Physical Broadcast Channel (SS/PBCH) Block-based Measurement Timing Configuration (SMTC);
the factor, or the first value, or the second value, multiplied by SS/PBCH Block (SSB) periodicity; and
the factor, or the first value, or the second value, multiplied by N; where a value of N is 1 or 3.

In some embodiments, in the method, the sending a first report to a network includes:
the terminal sending the first report to the network within a first time after receiving the cell activation command; or,
the terminal sending the first report to the network within a second time after receiving the second information.

In some embodiments, in the method, the first time includes at least one of the following:
3 ms;
6 ms;
a time period between the activation command and a command for Transmission Configuration Indicator (TCI);
Synchronization Signal/Physical Broadcast Channel (SS/PBCH) Block-based Measurement Timing Configuration (SMTC) multiplied by A, where A is an integer less than 8;
SS/PBCH Block (SSB) periodicity multiplied by B, where B is an integer less than 8;
C multiplied by N multiplied by SMTC;
C multiplied by N multiplied by SSB periodicity; and
C multiplied by N multiplied by Channel State Information (CSI) reference signal (RS) periodicity;
where a value of N is 1 or 3, and C is an integer less than 8.

In some embodiments, in the method, the measurement result is valid in a case where the following conditions are satisfied:
a measurement period for a deactivated cell, and/or
an accuracy requirement.

In some embodiments, in the method, the first report includes at least one of the following:
indication information indicating that there is a measurement result;
an indication that the measurement result is valid;
an indication that the measurement result is invalid; and
an indication that there is no measurement result.

Some embodiments of the present disclosure further provide a transmission method applied to a network device. The method includes:
receiving a first report sent by a terminal after a cell activation command and/or receiving first information sent by the terminal; where the first information is related to beam.

In some embodiments, in the method, the first report includes a SCell measurement report.

In some embodiments, the method further includes:
sending second information to the terminal;
where the second information is configured to instruct the terminal to send the first report after receiving the cell activation command; or, the second information is configured to instruct the terminal not to send the first report after receiving the cell activation command; or, the second information is configured to trigger the terminal to send the first report.

In some embodiments, in the method, the first report includes one or more of: measurement results, a beam index, and a cell index.

In some embodiments, in the method, the sending second information to the terminal includes one of the following:
sending the cell activation command to the terminal, where the cell activation command is the second information;
sending the cell activation command to the terminal, where the cell activation command includes the second information; and
sending a first command to the terminal before or after sending the cell activation command, where the first command includes the second information.

In some embodiments, in the method, in a case where the cell activation command is the second information, the cell activation command is configured to instruct the terminal to send a measurement report after receiving the cell activation command.

In some embodiments, in the method, in a case where the cell activation command includes the second information, a preset bit in the cell activation command is configured to indicate the second information, and
in a case where the second information is a first value, the second information is configured to instruct the terminal to send the first report; and/or
in a case where the second information is a second value, the second information is configured to instruct the terminal not to send the first report.

In some embodiments, in the method, in a case where the cell activation command includes the second information, N bits in the cell activation command are configured to indicate the second information; each bit corresponds to a cell index and is configured to instruct the terminal whether the terminal needs to send the first report for a cell corresponding to the cell index; where N is an integer greater than or equal to 1.

In some embodiments, in the method, in a case where the cell activation command includes the second information, the cell activation command includes a cell index and a preset bit corresponding to the cell index; the preset bit is configured to indicate the second information, and the second information is configured to instruct that the terminal needs to send the first report or does not need to send the first report for a cell corresponding to the cell index.

In some embodiments, in the method, in a case where the first command includes the second information, the second information includes a cell index for sending the first report and/or first report sending indication information.

In some embodiments, the method further includes:
receiving third information and/or fourth information sent by the terminal;
where the third information includes one or more of the following:
   the terminal supports SCell activation time reduction; and
   the terminal performs the SCell activation time reduction;
where the fourth information includes one or more of the following:
   information indicating that the terminal has a measurement result; and
   a cell identifier.

In some embodiments, in the method, the receiving the first report sent by the terminal includes:
receiving the first report sent by the terminal to the network device in a case where a first condition is satisfied; where the first condition includes one or more of the following:
   measurement performed within a first time period before receiving the cell activation command;
   measurement performed within a second time period after receiving the cell activation command;
   measurement performed within a third time period before sending a Channel State Information (CSI) report;
   measurement satisfies an accuracy requirement; and
   measurement satisfies a measurement period.

In some embodiments, in the method, the first information includes one or more of the following:
the terminal supports a factor less than 8;
the terminal supports a factor less than 8 for cell detection;
the terminal supports a factor less than 8 for L1 measurement;
a first value, where the first value indicates the value of a factor for cell detection; and
a second value, where the second value indicates the value of a factor for L1 measurement.

In some embodiments, the method includes:
in a case where a second condition is met, determining that the terminal does not support SCell activation time reduction and that the terminal needs to perform L3 measurement and L1 measurement and/or to stop waiting for the first report;
where the second condition includes one or more of the following:
   that the first report sent by the terminal is not received on configured uplink resources;
   that the first report sent by the terminal is not received within a first timer; and
   that the first report sent by the terminal is not received on configured uplink resources within a first timer.

In some embodiments, in the method, the receiving a first report sent by a terminal includes:
receiving the first report sent by the terminal within a first time after the cell activation command; or
receiving the first report sent by the terminal within a second time after receiving second information.

In some embodiments, in the method, the measurement result is valid in a case where the following conditions are satisfied:
a measurement period for a deactivated cell, and/or
an accuracy requirement.

In some embodiments, in the method, the first report includes at least one of the following:

indication information indicating that there is a measurement result;
an indication that the measurement result is valid;
an indication that the measurement result is invalid; and
an indication that there is no measurement result.

Some embodiments of the present disclosure further provide a terminal, including a processor; where the processor is configured to perform:
after a cell activation command, sending a first report to a network; and/or
sending first information to the network, where the first information is related to beam; and/or
determining a first time, where the first time is related to cell activation.

Some embodiments of the present disclosure further provide a network device, including a transceiver; where the transceiver is configured to:
receive a first report sent by a terminal after a cell activation command and/or receive first information sent by a terminal; where the first information is related to beam.

Some embodiments of the present disclosure further provide a transmission apparatus applied to a terminal. The apparatus includes:
a first processing unit, configured to:
after a cell activation command, send a first report to a network; and/or send first information to the network, where the first information is related to beam; and/or determine a first time, where the first time is related to cell activation.

Some embodiments of the present disclosure further provide a transmission apparatus applied to a network device. The apparatus includes:
a first receiving unit, configured to perform:
receive a first report sent by a terminal after a cell activation command and/or receiving first information sent by a terminal; where the first information is related to beam.

Some embodiments of the present disclosure further provide a terminal, including a processor, a memory, and a program stored in the memory and executable on the processor, where the program, when executed by the processor, is configured to implement the transmission method as described in any of the above claims.

Some embodiments of the present disclosure further provide a network device, including a processor, a memory, and a program stored in the memory and executable on the processor, where the program, when executed by the processor, is configured to implement the transmission method as described in any of the above claims.

Some embodiments of the present disclosure further provide a readable storage medium, storing a program, where the program, when executed by a processor, is configured to implement the steps in the transmission method as described in any of the above claims.

At least one of the technical solutions of the present disclosure has the following effects.

By adopting the transmission method of the embodiments of the present disclosure, the terminal sends the first report to the network after the cell activation command, and/or the terminal sends the first information to the network, and/or the terminal determines the first time. Through the first report, the terminal indicates to the network that it has recently measured the corresponding cell/frequency, thereby reducing the steps of secondary cell activation and achieving the effect of reducing delay. Through the first information, the terminal indicates the first information related to the beam to the network, which can assist the network and the terminal in having a consistent understanding of beam sweeping, enabling the terminal to complete beam sweeping more quickly, thereby reducing the steps of secondary cell activation and achieving the effect of reducing delay. And/or, the terminal determines the first time related to cell activation, and the determined first time is used to achieve reduction of cell activation time, thereby reducing the steps of SCell activation and achieving the effect of reducing delay.

### BRIEF DESCRIPTION OF THE DRAWINGS

FIG. 1 is a flowchart of a transmission method according to some embodiments of the present disclosure.
FIG. 2 is a flowchart of a transmission method according to other embodiments of the present disclosure.
FIG. 3 is a schematic structural diagram of a terminal according to some embodiments of the present disclosure.
FIG. 4 is a schematic structural diagram of a network device according to some embodiments of the present disclosure.
FIG. 5 is a schematic structural diagram of a transmission apparatus according to some embodiments of the present disclosure.
FIG. 6 is a schematic structural diagram of a transmission apparatus according to other embodiments of the present disclosure.

### DETAILED DESCRIPTION

To make the technical problems to be solved, the technical solutions, and the advantages of the present disclosure clearer, a detailed description will be provided below in conjunction with the accompanying drawings and specific embodiments.

The terms "first", "second", etc. in the specification and claims of the present disclosure are intended to distinguish between similar objects and are not to describe a specific order or sequence. It should be understood that the terms used in this way are interchangeable under appropriate circumstances, such that the embodiments of the present disclosure can be implemented in an order other than those illustrated or described herein, and objects distinguished by "first" and "second" are generally of the same type, and the number of objects is not limited. For example, a first object may be one or more. In addition, "and/or" in the specification and claims indicates at least one of the connected objects, and the character "/" generally indicates that the associated objects before and after it are in an "or" relationship.

The activation time (or described as an activation delay) of a secondary cell (SCell) in the related art is long, especially for the activation of a Frequency Range 2 (FR2) unknown SCell. It involves many steps, and the duration or time period of each step may be long (taking FR2 as an example, the activation time for an FR2 unknown SCell includes steps such as Automatic Gain Control (AGC), cell search (or described as cell detection), synchronization, Layer 1 measurement, etc. Therefore, the cell activation time is the sum of these steps. Moreover, because beam sweeping is required (with a beam factor of 8), the time for steps involving beam sweeping will be longer (extended by 8 times), even reaching the second level, resulting in a long cell activation time, which in turn leads to failure to complete cell activation in a timely manner, thereby affecting system performance.

When the terminal has measured the cell before receiving a SCell activation command, the steps for activating the SCell mentioned above may be reduced. However, if the terminal has only measured the cell before receiving the SCell activation command and has not reported measurement results to the network (e.g., due to lack of resources), then the network cannot know that the terminal has measured the cell. The network will still assume that the terminal requires a long SCell activation time, meaning it cannot or will not schedule the terminal during this period.

Based on the above problems, embodiments of the present disclosure provide a transmission method. After a cell activation command, a terminal sends a first report to the network, where the first report indicates to the network that the terminal has recently measured the corresponding cell/frequency , thereby reducing the steps for SCell activation and achieving the effect of reducing delay; and/or, the terminal may send first information to the network, where the first information indicates first information related to beam to the network, which can assist the network and the terminal in having a consistent understanding of beam sweeping, enabling the terminal to complete beam sweeping faster, thereby reducing the steps for SCell activation and achieving the effect of reducing delay; and/or, the terminal determines a first time related to cell activation. The determined first time is configured to achieve a reduction in the cell activation time, thereby reducing the steps for SCell activation and achieving the effect of reducing delay.

Furthermore, reporting measurement results after receiving the cell activation command may avoid the problem of being unable to report due to channel quality not meeting a threshold or lacking uplink resources. In the related art, measurement reporting is performed only when channel conditions (e.g., Reference Signal Received Power (RSRP), Reference Signal Received Quality (RSRQ), Signal to Interference plus Noise Ratio (SINR)) meet certain thresholds (e.g., the RSRP of the serving cell is below a threshold, the RSRP quality of a neighboring cell is above a threshold, or the difference in RSRP between the serving cell and the neighboring cell meets a threshold). When the above thresholds are not met/reached, the terminal does not perform measurement reporting. Additionally, even if the thresholds are met/reached, if there are no uplink resources at the reporting moment, the terminal also does not perform measurement reporting. In the method provided by the present disclosure, sending the first report after receiving the cell activation command is not limited by the above factors. As long as the terminal has a measurement result (or described as: having measured the target cell), the terminal can report the measurement results.

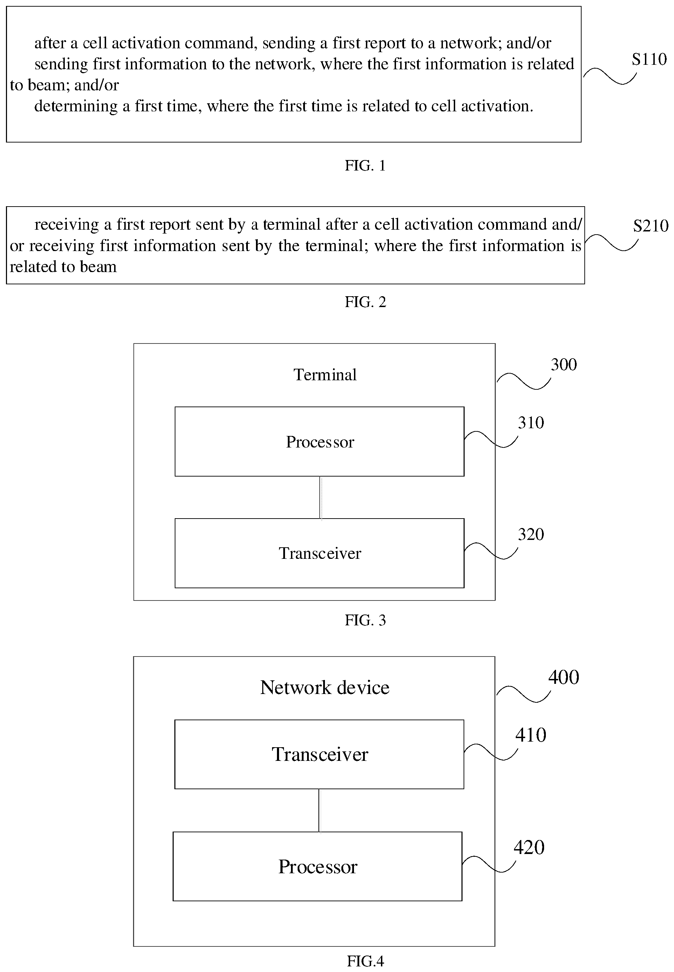

Some embodiments of the present disclosure provide a transmission method applied to a terminal. The method includes operations at blocks illustrated in FIG. 1.

At block S110: after a cell activation command, sending a first report to a network; and/or sending first information to the network, where the first information is related to beam; and/or determining a first time, where the first time is related to cell activation.

It should be noted that in the embodiments of the present disclosure, the mentioned network may also be referred to as the network side or network-side equipment. In some embodiments, the network-side equipment may be a base station.

The above-mentioned sending of the first report to the network after the cell activation command may be that a terminal, which supports reporting valid Layer 3 (L3) measurement results triggered by an unknown SCell activation command, reports valid L3 measurement results to the network after receiving the SCell activation command for unknown SCell. That is, the first report may include L3 measurement results.

Specifically, after receiving the SCell activation command, the terminal is ready to report the L3 measurement results no later than a certain time (the certain time is typically 7 ms + the timing / time period between downlink data transmission and acknowledgment); or, the time for the terminal to prepare to or be ready to report the L3 measurement results is not later than a predetermined time (or described as a first duration / time period) after receiving the SCell activation command. The predetermined time (or described as the first duration / time period) is 7 ms + the timing / time period between downlink data transmission and acknowledgment.

In some embodiments, the terminal reports first indication information. The first indication information includes at least one of: indicating whether the terminal supports reporting valid L3 measurement results triggered by the unknown SCell activation command; indicating whether the terminal supports beam sweeping factor reduction for SCell activation; indicating whether the terminal supports using SSB periodicity instead of SMTC periodicity during the SCell activation; indicating whether the terminal supports performing L1-RSRP measurement in non-DRX mode, even DRX is configured during the SCell activation. Here, DRX refers to Discontinuous Reception.

The SCell activation time (or described as SCell activation delay) includes at least time to obtain a first available uplink resource for L3 reporting. The SCell activation time does not include an L1-RSRP measurement time (or described as measurement delay).

In some embodiments, the "after a cell activation command, sending a first report to a network" may be described as "sending a first report after a cell activation command is triggered" or described as "after receiving a cell activation command, sending a first report to a network".

Furthermore, in the embodiments of the present disclosure, the mentioned cell activation command can also be described as a secondary cell (SCell) activation command.

In some embodiments, the mentioned sending of the first report may be described as reporting the first report. Specifically, the first report may be carried by a *MeasurementReport* message. In some embodiments, the first information is related to beam, which may also be described as the first information being related to beam sweeping. Here, the beam sweeping may be described as receive beam sweeping, and further described as terminal receive beam sweeping. In some embodiments, considering that beam sweeping affects activation delay, the first information being related to beam may be described as the first information being related to cell activation delay. The first information includes at least a beam sweeping factor for FR2 SCell activation, and/or the first information indicates whether the UE supports beam sweeping factor reduction for FR2 SCell activation. An FR2 terminal can typically only receive signals from one direction at a time, so it needs to determine the best receive beam through beam sweeping, and this process takes time. The speed of beam sweeping can be reflected by the beam sweeping factor. A smaller beam sweeping factor means less time required for sweeping. In the related art, the beam sweeping factor is 8. In the present disclosure, to reduce cell activation time, a smaller beam sweeping factor can be introduced. However, this method has requirements on terminal cost and power consumption. The terminal needs to notify the network, via the first information, whether it supports a beam sweeping factor smaller than 8 and what the supported beam sweeping factor is. Through the first information, the network and the terminal can have a consistent understanding of the terminal's beam sweeping time.

In some embodiments, in S110, the first report sent by the terminal to the network may include a SCell measurement report.

Using the transmission method, in some embodiments, after the cell activation command, the terminal may send the SCell measurement report to the network on Configured Grant (CG) resources. On one hand, from the terminal's perspective, the cell is not entirely new to the terminal; the terminal has recently measured the cell/frequency. Therefore, one or more steps among AGC, cell search, synchronization, and Layer 1 measurement (Layer 1 measurement includes Layer 1 Reference Signal Received Power (L1-RSRP) and/or Layer 1 Signal to Interference plus Noise Ratio (L1-SINR)) performed for SCell activation may be reduced. On the other hand, from the network's perspective, based on the SCell measurement report sent by the terminal, the network learns that the terminal has measured the cell, thereby enabling the cell activation time to be reduced, meaning the time during which the terminal cannot be scheduled is also reduced. This solution enables the terminal and the network to have a consistent understanding, thereby achieving the effect of reducing the SCell activation time.

In some embodiments, the first report includes at least one of the following:
indication information indicating that there is a measurement result;
indication that the measurement result is valid;
indication that the measurement result is invalid; and
indication that there is no measurement result.

Specifically, considering channel conditions, the terminal may not have measured the cell, or even if measured, the signal quality may be poor. By including the above information in the first report sent to the network, it can assist the network in understanding the terminal's status. When the first report indicates that there is no measurement result, or the measurement result is not valid, then steps such as cell detection and L1 measurement in the SCell activation time cannot be omitted. Additionally, in some embodiments, the terminal may send first information to the network, where the first information includes beam-related information. In some embodiments, the first information includes a factor for the terminal's Layer 1 measurement and/or a factor for Layer 3 measurement, with specific values related to terminal capability.

In some embodiments, the factor may be described as a beam sweeping factor. Compared to the beam sweeping factor of 8 in the related art, the beam factor included in the first information may be less than 8. Because the sweeping factor affects measurement time (or described as the measurement time being the product of the sweeping factor and a certain time), the first information can assist the network and the terminal in having a consistent understanding, meaning that the terminal can complete beam sweeping faster, thereby reducing the time for related steps during SCell activation (such as L3 measurement or described as cell search) and Layer 1 measurement, and ultimately achieving a reduction in FR2 SCell activation time.

In one implementation, the terminal may determine a first time related to cell activation. The first time includes at least the cell activation time (which may also be described as cell activation delay). This first time is shorter compared to the related art, achieving a reduction in cell activation time.

In one implementation, when the terminal does not send the first report or the first information, the first time may be determined through pre-defined information in the protocol (e.g., receive beam sweeping factor). The pre-defined information includes at least a smaller factor (the factor value is less than 8), achieving a reduction in cell activation time.

In one implementation, the terminal sends the first information to the network. The first information includes at least receive beam sweeping information, e.g., a beam sweeping factor. By reporting a supported reduced beam sweeping factor via the first information (e.g., a factor value less than 8), a reduction in cell activation time is achieved.

In some embodiments, the reduction in cell activation time may be achieved by reducing steps in the cell activation process, such as reducing the processing time of one of the processes in cell activation, or setting the processing time value to 0, etc.

It should be noted that in the embodiments of the present disclosure, for the first solution: sending the first report to the network after the cell activation command; the second solution: sending the first information related to beam to the network; and the third solution: determining the first time related to cell activation, the three solutions may be executed individually, or any combination of two or all three may be executed. The function of sending the first report is to allow at least some steps in the SCell activation time to be omitted. The function of sending the first information is to reduce the time for steps involving beam sweeping. The function of determining the first time is to determine the first time based on the omission of some steps brought by sending the first report, and based on enhancement schemes such as the smaller or reduced beam sweeping factor brought by sending the first information or protocol pre-definition. The first time includes at least the cell activation time (which may also be described as cell activation delay). This first time is shorter compared to the related art, thereby achieving a reduction in cell activation time.

Therefore, the above three methods can all achieve a reduction in the activation time of FR2 SCells (including FR2 unknown SCell).

In some embodiments, the mentioned measurement report is described as any one of measurement results, Layer 3 (L3) measurement results, and Layer 3 measurement report.

In some embodiments, the mentioned SCell includes an unknown SCell. The unknown SCell includes a Frequency Range 2 (FR2) unknown SCell and a Frequency Range 1 (FR1) unknown SCell. The unknown SCell typically refers to a target SCell that is unknown.

In some embodiments, the first report includes one or more of measurement results, a beam index, and a cell index.

In some embodiments, the measurement result includes one or more of Synchronization Signal Reference Signal Received Power (SS-RSRP), SS reference signal received quality (SS-RSRQ), Synchronization Signal (SS) Signal to Interference plus Noise Ratio (SS-SINR), Channel State Information-Reference Signal Received Power (CSI-RSRP), CSI reference signal received quality (CSI-RSRQ), CSI Signal to Interference plus Noise Ratio (CSI-SINR), L1-RSRP, and L1-SINR.

In some embodiments, the beam index includes one or more of a Synchronization Signal Block (SSB) index and a CSI-RS index.

For example, the first report sent by the terminal to the network includes an SSB index, indicating that the terminal has measured the SSB corresponding to the SSB index; by including Layer 3 measurement information, the measurement result information obtained by the terminal for the SSB corresponding to the SSB index is indicated.

In some embodiments, the cell index may also be described as a SCell index or SCellIndex.

In one implementation, the measurement result is valid when the following conditions are met:
a measurement period for a deactivated cell, and/or
an accuracy requirement.

Here, the measurement period may also be described as measurement time or as measurement period.

In some embodiments, when the measurement result is valid, meaning it satisfies the measurement period for the deactivated cell and/or the accuracy requirement, the terminal sends the first report to the network. This may improve the quality of the measurement results in the first report, facilitating the network's use of the measurement result. When the measurement result does not meet the validity conditions, the terminal does not report the measurement result. In some embodiments, the method further includes:
receiving second information sent by the network;
where the second information is configured to instruct the terminal to send the first report after receiving the cell activation command; or, the second information is configured to instruct the terminal not to send the first report after receiving the cell activation command; or, the second information is configured to trigger the terminal to send the first report.

Using this implementation, by sending the second information to the terminal, the network instructs the terminal whether it needs to send the first report after receiving the cell activation command, or the second information is configured to trigger the terminal to send the first report, such that the terminal, according to the second information and when it currently stores measurement information of the target cell or target frequency after receiving the cell activation command sent by the network, can send the measurement report to the network. This enables information interaction between the network and the terminal, allowing the terminal to report to the network the measurement information that it has measured the target cell or target frequency , avoiding re-executing operations such as AGC, synchronization, and Layer 1 measurement in the SCell activation process, thereby achieving the effect of reducing delay.

In some embodiments, the receiving the second information sent by the network includes one of the following:
receiving a cell activation command sent by the network, where the cell activation command is the second information;
receiving a cell activation command sent by the network, where the cell activation command includes the second information; and
receiving a first command sent by the network before or after sending the cell activation command, where the first command includes the second information.

In some embodiments, the first command includes one or more of a Medium Access Control (MAC) Control Element (CE) command, Radio Resource Control (RRC) signaling, and Downlink Control Information (DCI) signaling.

In some embodiments, in a case where the second information instructs the terminal to send the first report, after the terminal receives the cell activation command sent by the network: when the terminal has measured the activated SCell within a preset time range, or when the terminal stores the measurement results of the activated SCell, the terminal sends the measurement report to the network.

In one implementation, when the cell activation command is the second information, the cell activation command is configured to instruct the terminal to send the measurement report after receiving the cell activation command.

Using this implementation, the second information is integrated into the cell activation command and sent to the terminal in an implicit manner. Specifically, the cell activation command sent by the network to the terminal also implicitly indicates that it is the second information. In some embodiments, the cell activation command is configured to instruct the terminal to send the measurement report after receiving the cell activation command. Using this implementation, after receiving the cell activation command, when the terminal has measured the target cell or target frequency within a preset time, it sends the measurement report to the network.

In one implementation, in a case where the cell activation command includes the second information, a preset bit in the cell activation command is configured to indicate the second information. When the second information is a first value, it is configured to instruct the terminal to send the first report; and/or when the second information is a second value, it is configured to instruct the terminal not to send the first report.

Using this implementation, the second information is integrated into the cell activation command and sent to the terminal in an explicit manner. Specifically, the cell activation command sent by the network to the terminal includes the second information, which is configured to explicitly instruct whether the terminal needs to send the measurement report.

In some embodiments, the cell activation command is a MAC CE command. In some embodiments, a preset bit in the cell activation command is configured to indicate the second information. When the second information is a first value, it is configured to instruct the terminal to send the measurement report; when the second information is a second value, it is configured to instruct the terminal not to send the measurement report. For example, the preset bit is 1 bit. In the cell activation command, this preset bit is configured to instruct the terminal to send or not to send a measurement report. For instance, when this preset bit is 1, it instructs the terminal to send the measurement report; when it is 0, it instructs the terminal not to send the measurement report.

Using this implementation, according to the second information sent by the network via the cell activation command (MAC CE command), when the second information instructs the terminal to send the measurement report, all SCells corresponding to this cell activation command need to send the measurement report. That is, the terminal needs to send the measurement report for all SCells whose activation is instructed in this cell activation command.

In another implementation, in a case where the cell activation command includes the second information, N bits in the cell activation command are configured to indicate the second information, where each bit corresponds to a cell index and is configured to instruct the terminal whether it needs to send the first report for the cell corresponding to the cell index. N is an integer greater than or equal to 1.

Specifically, the activated SCells indicated in the cell activation command may be sorted according to a preset order, such as in descending order of SCell index or ascending order of SCell index. For N bits corresponding to the second information, each bit corresponds to a SCell index and is configured to instruct the terminal whether it needs to send a measurement report for the SCell corresponding to that SCell index. For example, when a bit is a first value, it instructs that for the SCell corresponding to that bit, the terminal needs to send a measurement report to the network device; when that bit is a second value, it instructs that for the SCell corresponding to that bit, the terminal does not need to send a measurement report to the network device.

In another implementation where the network device sends a cell activation command including the second information to the terminal, and the second information is configured to explicitly instruct whether the terminal needs to send a measurement report: in a case where the cell activation command includes the second information, the cell activation command includes a cell index and a preset bit corresponding to the cell index. The preset bit is configured to indicate the second information, and the second information is configured to instruct that for the cell corresponding to the cell index, the terminal needs to send the first report or does not need to send the first report.

Using this indication method, each activated SCell's SCell index in the cell activation command corresponds to a preset bit. When the preset bit is a first value, it instructs that for the corresponding SCell, the terminal needs to send a measurement report to the network device; when the preset bit is a second value, it instructs that for the corresponding SCell, the terminal does not need to send a measurement report to the network device.

In another implementation, in a case where the first command includes the second information, the second information includes a cell index for sending the first report and/or first report sending indication information.

Here, the first command includes one or more of a MAC CE command, RRC signaling, and DCI signaling.

When the first command includes a MAC CE command, in some embodiments, this MAC CE command is a command different from the cell activation command, dedicated to sending the second information. Furthermore, in this implementation, the second information in this MAC CE command is configured to instruct the terminal to send a measurement report, or to instruct the terminal not to send a measurement report.

In some embodiments, the MAC CE command for sending the second information is sent after the cell activation command. In this way, after receiving the cell activation command, the terminal determines whether to send a measurement report to the network device according to the received MAC CE command.

In some embodiments, the MAC CE command for sending the second information is sent before sending the cell activation command. In this way, the terminal obtains the second information before receiving the cell activation command and can send the measurement report to the network device upon receiving the cell activation command. Compared to obtaining the second information after receiving the cell activation command, this may more effectively reduce the cell activation delay.

In some embodiments, in this implementation, the second information includes a SCell index for which a measurement report needs to be sent and/or measurement report sending indication information. In this way, through the measurement report sending indication information, the terminal can be instructed whether it needs to send a measurement report, and through the SCell index, the terminal can be instructed whether it needs whether to send a measurement report for the SCell corresponding to that SCell index.

In some embodiments, the method further includes:
sending third information and/or fourth information to the network;
where the third information includes one or more of the following:
   the terminal supports SCell activation time reduction; and
   the terminal performs the SCell activation time reduction;
where the fourth information includes one or more of the following:
   information indicating that the terminal has a measurement result; and
   cell identity.

It should be noted that in the embodiments of the present disclosure, the mentioned SCell activation time reduction may also be described as SCell activation time enhancement.

By sending the third information to the network, the terminal is configured to notify the network that it can support reducing the cell activation delay, or that the terminal performs reduction of the cell activation delay, meaning the terminal no longer re-performs operations such as AGC, synchronization, and L1 measurement required for cell activation.

In another implementation, the third information may notify the network that cell activation delay reduction is not possible. That is, the terminal needs to perform operations such as AGC, synchronization, and L1 measurement according to the normal cell activation process.

It should be noted that the cell activation process affects network scheduling. Whether the terminal can send a measurement report means whether the terminal can reduce the SCell activation delay. The network knowing whether the terminal can reduce the cell activation delay helps the network with scheduling. Whether the terminal can send a measurement report is related to whether the terminal supports SCell activation enhancement, whether it has measured the cell recently (e.g., within 5 seconds) (i.e., whether it has a measurement result), etc. When the terminal has sent a measurement report within a period of time (e.g., 5 seconds), the cell is usually considered as known; otherwise, the cell is considered as unknown.

In the embodiments of the present disclosure, by sending the fourth information to the network, the terminal indicates that it stores measurement information of the target cell corresponding to the cell identity. In some embodiments, the cell identity included in the fourth information may be a cell index. The information indicating that the terminal has a measurement result indicates that the terminal corresponding to that cell index has a measurement result.

In another implementation, the fourth information may indicate that the terminal does not store measurement information of the target cell. For example, the fourth information includes the cell index of the target cell and indication information corresponding to that cell index indicating the absence of measurement information.

Since the cell activation process affects network scheduling, whether the terminal can send a measurement report means whether the terminal can reduce the cell activation delay. In this way, the network device, by learning whether the terminal can reduce the cell activation delay, helps with network scheduling.

In some embodiments, the sending the first report to the network includes:
sending the first report to the network when a first condition is met; where the first condition includes one or more of the following:
measurement performed within a first time period before receiving the cell activation command;
measurement performed within a second time period after receiving the cell activation command;
measurement performed within a third time period before sending a Channel State Information (CSI) report;
the measurement meets an accuracy requirement; and
the measurement meets a measurement period.

Specifically, when the terminal stores measurement results of the target cell or target frequency , it further needs to determine the validity of the measurement result before sending the measurement report. Specifically, when the measurement result is obtained within the first time period before the cell activation command and/or within the second time period after the cell activation command and/or within the third time period before reporting the CSI report, then the measurement information based on which the measurement was performed is determined to be valid, and the step of sending the measurement report to the network device is performed.

In some embodiments, the first time period, the second time period, and the third time period may be configured by the network or predefined by protocol.

Using this implementation may determine whether the measurement result is valid, ensuring that the measurement result in the first report is valid. When the measurement result stored by the terminal is from a long time ago, considering channel variations, it is likely that the measurement result is already invalid and cannot represent the actual channel condition. The terminal needs to re-perform processes such as cell search and measurement, meaning these steps cannot be omitted in the SCell activation process. When the measurement result is not valid, the terminal does not need to send the first report. When the measurement result is from recent measurement, its validity can be ensured, and steps such as cell search and measurement can be omitted in the SCell activation process.

In some embodiments, when it is determined that the measurement information based on which the measurement was performed is invalid according to the above method, the terminal may send fifth information to the network device to report to the network device that it will not report the measurement result, i.e., it will not perform cell activation delay reduction processing; or, send sixth information to the network device to indicate to the network device that the terminal does not store measurement information of the target cell or target frequency. In some embodiments, the sent sixth information includes an identifier of the target cell or target frequency for which there is no measurement information.

In some embodiments, the first information includes one or more of the following:
the terminal supports a factor less than 8;
the terminal supports a factor less than 8 for cell detection;
the terminal supports a factor less than 8 for L1 measurement;
a first value, where the first value indicates the value of the factor for cell detection; and
a second value, where the second value indicates the value of the factor for L1 measurement.

It should be noted that in the embodiments of the present disclosure, "the terminal supports a factor less than 8" may also be described as the terminal supports a beam sweeping factor less than 8, including that: in the FR2 unknown SCell scenario, the terminal supports a beam sweeping factor less than 8. "The terminal supports a factor less than 8 for cell detection" may be described as the terminal supports a beam sweeping factor less than 8 for cell detection (or described as cell search, or described as Primary Synchronization Signal (PSS)/Secondary Synchronization Signal (SSS) detection), including that during the FR2 unknown SCell scenario, the terminal supports a beam sweeping factor less than 8 for cell detection. "The terminal supports a factor less than 8 for L1 measurement" may be described as the terminal supports a beam sweeping factor less than 8 for L1 measurement, including that during the FR2 unknown SCell scenario, the terminal supports a beam sweeping factor less than 8 for L1 measurement. The first value may indicate the beam sweeping factor for cell detection during the FR2 unknown SCell scenario. The second value indicates the beam sweeping factor for L1 measurement in the FR2 unknown SCell scenario.

In some embodiments, the set of the first value is {1, 2, 4, 6}. Here, "the first value indicates the value of the factor for cell detection" may be understood as the SSB-based Measurement Timing Configuration (SMTC) multiplied by the first value or the SSB periodicity multiplied by the first value. "The first value indicates the value of the factor for cell detection" may be described as the first value indicating a reduced beam sweeping factor of cell detection; or described as the first value indicates reducing beam sweeping factor for cell detection; or it may be described as the first value indicates reducing beam sweeping factor for cell detection if the terminal has full set of beam sweeping during AGC settling part (full set of beam sweeping can be understood as the beam sweeping factor being equal to 8).

In some embodiments, the set of the second value is {0, 1, 2, 3, 4, 5, 6, 7}. Here, "the second value indicates the value of the factor for L1 measurement" may be understood as the L1-RSRP measurement time including at least the SSB periodicity multiplied by the second value or the CSI-RS periodicity multiplied by the second value. "The second value indicates the value of the factor for L1 measurement" may be described as the second value indicates reducing beam sweeping factor of L1 measurement; or described as the second value indicating the reduced beam sweeping factor for L1 measurement; or described as the second value indicating the reduced beam sweeping factor for L1-RSRP measurement; or it may be described as the second value indicates reducing beam sweeping factor for L1-RSRP measurement if the terminal has full set of beam sweeping during AGC settling part (full set of beam sweeping can be understood as the beam sweeping factor being equal to 8).

In some embodiments, the method further includes:
the SCell activation time or delay of the terminal includes at least: 3 ms and/or a time period between the activation command and the command for Transmission Configuration Indicator (TCI).

It should be noted that after SCell activation enhancement, the reduced cell activation delay includes MAC CE time (or described as MAC CE decoding/processing time), the delay for sending the measurement report, L1 measurement delay (L1-RSRP, L1-SINR), and margin (e.g., the time period between the cell activation command and the command for TCI, or the time period between sending the measurement report and the command for TCI). In some embodiments, the command for TCI is a TCI activation command or described as a TCI configuration command. That is, steps such as cell detection and L1 measurement can be omitted.

In some embodiments, the cell activation delay includes one of the following:
the cell activation delay includes at least MAC CE feedback time (e.g., 3 ms);
the cell activation delay includes at least AGC time (the AGC time may be described as T_{FirstSSB_MAX} + 15*T_{SMTC_MAX}, where T_{FirstSSB_MAX} is the time to the end of the first complete SSB burst indicated by SMTC, and T_{SMTC_MAX} is the longer SMTC periodicity between the active serving cells and the SCell being activated);
the cell activation delay includes at least 3 ms + the time period between the activation command and the command for TCI;
the cell activation delay includes at least 3 ms + the time period between the activation command and the command for TCI + L1 measurement time;
the cell activation delay includes at least 3 ms + the delay for sending the measurement report + the time period between the activation command and the command for TCI; and
the cell activation delay includes at least 3 ms + the delay for sending the measurement report + the time period between the activation command and the command for TCI + L1 measurement time.

In some embodiments, the method further includes:
the SCell activation time of the terminal (which may also be described as SCell activation delay) includes at least one of the following:
the factor, or the first value, or the second value multiplied by a Synchronization Signal/Physical Broadcast Channel (SS/PBCH) Block-based Measurement Timing Configuration (SMTC), or described as the value or result which is obtained by the factor, or the first value, or the second value multiplied by a Synchronization Signal/Physical Broadcast Channel (SS/PBCH) Block-based Measurement Timing Configuration (SMTC);
the factor, or the first value, or the second value multiplied by Synchronization Signal/Physical Broadcast Channel (SS/PBCH) Block (SSB) periodicity, or described as the value or result which is obtained by the factor, or the first value, or the second value multiplied by Synchronization Signal/Physical Broadcast Channel (SS/PBCH) Block (SSB) periodicity; and
the factor, or the first value, or the second value multiplied by N or described as the value or result which is obtained by the factor, or the first value, or the second value multiplied by N; where the value of N is 1 or 3.

In some embodiments, the Synchronization Signal/Physical Broadcast Channel (SS/PBCH) Block may also be described as a Synchronization Signal Block (SSB).

In some embodiments, the SMTC includes the SMTC periodicity of the SCell being activated.

In one implementation, since the periodicity of an SSB is usually not greater than the SMTC, the SCell activation time of the terminal being the factor, the first value, or the second value multiplied by the periodicity of an SS/PBCH Block (SSB), compared to the SCell activation time of the terminal being the factor, the first value, or the second value multiplied by the SMTC, may further reduce the SCell activation time. In some embodiments, the mentioned factor includes, but is not limited to, only being able to include a beam sweeping factor. Here, the first factor and the second factor include one or more of: the beam sweeping factor supported by the terminal, the supported beam sweeping factor for cell detection, and/or the supported beam sweeping factor for L1 measurement.

Specifically, since the beam sweeping factor affects measurement time (measurement time is the product of the sweeping factor and a certain time/time period), the first information can assist the network and the terminal in having a consistent understanding, meaning the terminal can complete beam sweeping faster. The time for related steps (such as L3 measurement, or described as cell search, or described as cell detection) and Layer 1 measurement may be reduced, thereby achieving a reduction in FR2 SCell activation time.

In some embodiments, both the first value and the second value are less than 8. Specifically, when the terminal uses a beam sweeping factor of 8 in the AGC step, it means the terminal has already obtained certain beam information. Then, in the subsequent cell detection and L1 measurement steps, corresponding beam sweeping simplification (or described as enhancement) can be performed. How to simplify specifically depends on terminal implementation, therefore, the terminal needs to report the first value and the second value.

In some embodiments, the sending the first report to the network includes:
the terminal sending the first report to the network within the first time after receiving the cell activation command; or,
the terminal sending the first report to the network within a second time after receiving the second information.

Here, when the terminal exceeds the first time after receiving the cell activation command, it does not send the first report to the network; and when it exceeds the second time after receiving the second information, it does not send the first report to the network. In this way, the terminal can send the first report as soon as possible after receiving the SCell activation command. Additionally, it further enables the network to determine how to allocate uplink resources for the terminal to send the report. When the first report is not sent, then steps such as cell detection and L1 measurement in the SCell activation time cannot be omitted.

Furthermore, this implementation, i.e., sending the first report to the network within the first time after receiving the cell activation command or within the second time after receiving the second information, by introducing the first time and the second time, may prevent the terminal from indefinitely searching for resources to send the first report. In some embodiments, when the terminal does not find resources within the first time or the second time, then the terminal may not send the first report. The values of the first time and the second time may be configured by the network or predefined in the protocol. The length of the first time and the second time includes at least one of: HARQ time, MAC CE processing time (also described as 3 ms), and time margin.

In one implementation, when the terminal determines the first time, the determined first time includes at least one of the following:
3 ms;
6 ms;
a time period between the activation command and the command for Transmission Configuration Indicator (TCI);
SMTC multiplied by A, where A is an integer less than 8;
SSB periodicity multiplied by B, where B is an integer less than 8;
C multiplied by N multiplied by SMTC;
C multiplied by N multiplied by SSB periodicity; and
C multiplied by N multiplied by CSI-RS periodicity;
where the value of N is 1 or 3, and C is an integer less than 8.

In this implementation, in some embodiments, A, B, and C may be respectively one or more of the following:
a factor less than 8 supported by the terminal;
a factor less than 8 for cell detection supported by the terminal;
a factor less than 8 for L1 measurement supported by the terminal;
a first value, where the first value indicates the value of the factor for cell detection; and
a second value, where the second value indicates the value of the factor for L1 measurement.

Using this implementation, compared to the related art, the first time determined according to protocol pre-definition is reduced, meaning the time related to cell activation is reduced. Therefore, it may achieve the effect of reducing the processing time of one of the processes in the cell activation process, thereby achieving the effect of reducing the cell activation time. Using the cell activation method described in the embodiments of the present disclosure, after the terminal receives the second information sent by the network, and when the second information instructs the terminal to send a measurement report, after receiving the cell activation command sent by the network, the terminal sends a measurement report to the network. According to this cell activation command, the terminal no longer re-performs operations such as AGC, synchronization, and L1 measurement required for cell activation; it only needs to perform HARQ feedback and report CSI reports. In this way, the cell activation delay can only include the time for performing HARQ feedback (e.g., 3 ms), thereby greatly reducing the cell activation delay. Furthermore, for FR2, the cell activation delay is a sum of the time for performing HARQ feedback (e.g., 3 ms) and the time period between the cell activation command sent by the network and the command for Transmission Configuration Indicator (TCI) for beams. Since the time for performing AGC, synchronization, and L1 measurement does not need to be included, it can also achieve the effect of greatly reducing the cell activation delay.

Some embodiments of the present disclosure further provide a transmission method performed by a network device. The method includes operations at blocks illustrated in FIG. 2.

At block S210: receiving a first report sent by a terminal after a cell activation command and/or receiving first information sent by the terminal; where the first information is related to beam.

Using the transmission method in the embodiments of the present disclosure, the terminal sends the first report after the cell activation command and/or the first information to the network. Through the first report, it indicates to the network that the terminal has recently measured the corresponding cell/frequency , thereby reducing the steps for SCell activation and achieving the effect of reducing delay; through the first information, it indicates the first information related to beam to the network, which can assist the network and the terminal in having a consistent understanding of beam sweeping, enabling the terminal to complete beam sweeping faster, thereby reducing the steps for SCell activation and achieving the effect of reducing delay.

In some embodiments, in the transmission method, the first report includes a SCell measurement report.

In some embodiments, in the transmission method, the method further includes:
sending second information to the terminal;
where the second information is configured to instruct the terminal to send the first report after receiving the cell activation command; or, the second information is configured to instruct the terminal not to send the first report after receiving the cell activation command; or, the second information is configured to trigger the terminal to send the first report.

In some embodiments, in the transmission method, the first report includes one or more of measurement results, a beam index, and a cell index.

In some embodiments, in the transmission method, the sending the second information to the terminal includes one of the following:
sending a cell activation command to the terminal, where the cell activation command is the second information;
sending a cell activation command to the terminal, where the cell activation command includes the second information; and
sending a first command to the terminal before or after sending the cell activation command, where the first command includes the second information.

In some embodiments, in the transmission method, when the cell activation command is the second information, the cell activation command is configured to instruct the terminal to send a measurement report after receiving the cell activation command.

In some embodiments, in the transmission method, in a case where the cell activation command includes the second information, a preset bit in the cell activation command is configured to indicate the second information, and when the second information is a first value, it is configured to instruct the terminal to send the first report; and/or when the second information is a second value, it is configured to instruct the terminal not to send the first report.

In some embodiments, in the transmission method, in a case where the cell activation command includes the second information, N bits in the cell activation command are configured to indicate the second information, where each bit corresponds to a cell index and is configured to instruct the terminal whether it needs to send the first report for the cell corresponding to the cell index. N is an integer greater than or equal to 1.

In some embodiments, in the transmission method, in a case where the cell activation command includes the second information, the cell activation command includes a cell index and a preset bit corresponding to the cell index. The preset bit is configured to indicate the second information, and the second information is configured to instruct that for the cell corresponding to the cell index, the terminal needs to send the first report or does not need to send the first report.

In some embodiments, in the transmission method, in a case where the first command includes the second information, the second information includes a cell index for sending the first report and/or first report sending indication information.

In some embodiments, in the transmission method, the method further includes:
receiving third information and/or fourth information sent by the terminal;
where the third information includes one or more of the following:
   the terminal supports SCell activation time reduction; and
   the terminal performs the SCell activation time reduction;
where the fourth information includes one or more of the following:
   information indicating that the terminal has a measurement result; and
   cell identity.

In some embodiments, in the transmission method, the receiving the first report sent by the terminal includes:
receiving the first report sent by the terminal to the network device when a first condition is met; where the first condition includes one or more of the following:
measurement performed within a first time period before receiving the cell activation command;
measurement performed within a second time period after receiving the cell activation command;
measurement performed within a third time period before sending a Channel State Information (CSI) report;
the measurement meets an accuracy requirement; and
the measurement meets a measurement period.

In some embodiments, in the transmission method, the first information includes one or more of the following:
the terminal supports a factor less than 8;
the terminal supports a factor less than 8 for cell detection;
the terminal supports a factor less than 8 for L1 measurement;
a first value, where the first value indicates the value of the factor for cell detection; and
a second value, where the second value indicates the value of the factor for L1 measurement.

In some embodiments, in the transmission method, the method includes:
determining that the terminal does not support SCell activation time reduction and that the terminal needs to perform L3 measurement and L1 measurement and/or to stop waiting for the first report, in a case where a second condition is met; where the second condition includes one or more of the following:
the first report sent by the terminal is not received on configured uplink resources;
the first report sent by the terminal is not received within a first timer; and
the first report sent by the terminal is not received on configured uplink resources within the first timer.

Specifically, to prevent the network from waiting indefinitely for the terminal to send a measurement report, in a case where the second condition including one or more of the following is met, it is determined that the terminal does not support the cell activation delay reduction and/or that the terminal needs to perform L3 measurement and L1 measurement:
when the network does not receive the measurement report sent by the terminal on the configured uplink resources, it is considered that the terminal does not support the cell activation delay reduction (or described as the terminal needs to perform L3 measurement and L1 measurement);
when the network does not receive the measurement report sent by the terminal within the first timer, it is considered that the terminal does not support the cell activation delay reduction (or described as the terminal needs to perform L3 measurement and L1 measurement); and
when the network does not receive the measurement report sent by the terminal on the configured uplink resources within the first timer, it is considered that the terminal does not support the cell activation delay reduction (or described as the terminal needs to perform L3 measurement and L1 measurement).

In some embodiments, in the transmission method, the receiving the first report sent by the terminal includes:
receiving the first report sent by the terminal within a first time after the cell activation command; or
receiving the first report sent by the terminal within a second time after receiving the second information.

In some embodiments, in the transmission method, the measurement result is valid when the following conditions are met:
a measurement period for a deactivated cell, and/or
an accuracy requirement.

In some embodiments, in the transmission method, the first report includes at least one of the following:
indication information indicating that there is a measurement result;
indication that the measurement result is valid;
indication that the measurement result is invalid; and
indication that there is no measurement result.

It should be noted that the specific implementation process of the transmission method applied to the network device in the embodiments of the present disclosure may be combined with the detailed description in the transmission method when applied to the terminal, which will not be repeated herein.

Some embodiments of the present disclosure further provide a terminal, as shown in FIG. 3, the terminal 300 includes a processor 310 and a transceiver 320; where the processor 310 is configured to perform:
after a cell activation command, sending a first report to a network; and/or
sending first information to the network, where the first information is related to beam; and/or
determining a first time, where the first time is related to cell activation.

In some embodiments, in the terminal, the first report includes a SCell measurement report.

In some embodiments, in the terminal, the transceiver 320 is further configured to:
receive second information sent by the network;
where the second information is configured to instruct the terminal to send the first report after receiving the cell activation command; or, the second information is configured to instruct the terminal not to send the first report after receiving the cell activation command; or, the second information is configured to trigger the terminal to send the first report.

In some embodiments, in the terminal, the first report includes one or more of measurement results, a beam index, and a cell index.

In some embodiments, in the terminal, the transceiver 320 receiving the second information sent by the network includes one of the following:
receiving a cell activation command sent by the network, where the cell activation command is the second information;
receiving a cell activation command sent by the network, where the cell activation command includes the second information; and
receiving a first command sent by the network before or after sending the cell activation command, where the first command includes the second information.

In some embodiments, in the terminal, when the cell activation command is the second information, the cell activation command is configured to instruct the terminal to send the first report after receiving the cell activation command.

In some embodiments, in the terminal, in a case where the cell activation command includes the second information, a preset bit in the cell activation command is configured to indicate the second information. When the second information is a first value, it is configured to instruct the terminal to send the first report; and/or when the second information is a second value, it is configured to instruct the terminal not to send the first report.

In some embodiments, in the terminal, in a case where the cell activation command includes the second information, N bits in the cell activation command are configured to indicate the second information, where each bit corresponds to a cell index and is configured to instruct the terminal whether it needs to send the first report for the cell corresponding to the cell index. N is an integer greater than or equal to 1.

In some embodiments, in the terminal, in a case where the cell activation command includes the second information, the cell activation command includes a cell index and a preset bit corresponding to the cell index. The preset bit is configured to indicate the second information, and the second information is configured to instruct that for the cell corresponding to the cell index, the terminal needs to send the first report or does not need to send the first report.

In some embodiments, in the terminal, in a case where the first command includes the second information, the second information includes a cell index for sending the first report and/or first report sending indication information.

In some embodiments, in the terminal, the transceiver 320 is further configured to perform:
sending third information and/or fourth information to the network;
where the third information includes one or more of the following:
   the terminal supports SCell activation time reduction; and
   the terminal performs the SCell activation time reduction;
where the fourth information includes one or more of the following:
   information indicating that the terminal has a measurement result; and
   cell identity.

In some embodiments, in the terminal, the processor 310 sending the first report to the network includes:
sending the first report to the network when a first condition is met; where the first condition includes one or more of the following:
measurement performed within a first time period before receiving the cell activation command;
measurement performed within a second time period after receiving the cell activation command;
measurement performed within a third time period before sending a Channel State Information (CSI) report;
the measurement meets an accuracy requirement; and
the measurement meets a measurement period.

In some embodiments, in the terminal, the first information includes one or more of the following:
the terminal supports a factor less than 8;
the terminal supports a factor less than 8 for cell detection;
the terminal supports a factor less than 8 for L1 measurement;
a first value, where the first value indicates the value of the factor for cell detection; and
a second value, where the second value indicates the value of the factor for L1 measurement.

In some embodiments, in the terminal, the SCell activation time or delay of the terminal includes at least: 3 ms and/or a time period between an activation command and the command for Transmission Configuration Indicator (TCI).

In some embodiments, in the terminal, the SCell activation time of the terminal includes at least one of the following:
the factor, or the first value, or the second value multiplied by a Synchronization Signal/Physical Broadcast Channel (SS/PBCH) Block-based Measurement Timing Configuration (SMTC);
the factor, or the first value, or the second value multiplied by Synchronization Signal/Physical Broadcast Channel (SS/PBCH) Block (SSB) periodicity; and
the factor, or the first value, or the second value multiplied by N; where the value of N is 1 or 3.

In some embodiments, in the terminal, the processor 310 sending the first report to the network includes:
sending the first report to the network within the first time after receiving the cell activation command; or,
sending the first report to the network within a second time after receiving the second information.

In some embodiments, in the terminal, the first time includes at least one of the following:
3 ms;
6 ms;
a time period between the activation command and the command for Transmission Configuration Indicator (TCI);
SMTC multiplied by A, where A is an integer less than 8;
SSB periodicity multiplied by B, where B is an integer less than 8;
C multiplied by N multiplied by SMTC;
C multiplied by N multiplied by SSB periodicity; and
C multiplied by N multiplied by CSI-RS periodicity;
where the value of N is 1 or 3, and C is an integer less than 8.

In some embodiments, in the terminal, the measurement result is valid when the following conditions are met:
a measurement period for a deactivated cell, and/or
an accuracy requirement.

In some embodiments, in the terminal, the first report includes at least one of the following:
indication information indicating that there is a measurement result;
indication that the measurement result is valid;
indication that the measurement result is invalid; and
indication that there is no measurement result.

Some embodiments of the present disclosure further provide a network device, as shown in FIG. 4, the network device 400 includes a transceiver 410, where the transceiver 410 is configured to:
receive a first report sent by a terminal after a cell activation command and/or receive first information sent by the terminal; where the first information is related to beam.

In some embodiments, in the network device, the first report includes a SCell measurement report.

In some embodiments, in the network device, the transceiver 410 is further configured to:
send second information to the terminal;
where the second information is configured to instruct the terminal to send the first report after receiving the cell activation command; or, the second information is configured to instruct the terminal not to send the first report after receiving the cell activation command; or, the second information is configured to trigger the terminal to send the first report.

In some embodiments, in the network device, the first report includes one or more of measurement results, a beam index, and a cell index.

In some embodiments, in the network device, the transceiver 410 sending the second information to the terminal includes one of the following:
sending a cell activation command to the terminal, where the cell activation command is the second information;
sending a cell activation command to the terminal, where the cell activation command includes the second information; and
sending a first command to the terminal before or after sending the cell activation command, where the first command includes the second information.

In some embodiments, in the network device, when the cell activation command is the second information, the cell activation command is configured to instruct the terminal to send a measurement report after receiving the cell activation command.

In some embodiments, in the network device, in a case where the cell activation command includes the second information, a preset bit in the cell activation command is configured to indicate the second information, and when the second information is a first value, it is configured to instruct the terminal to send the first report; and/or when the second information is a second value, it is configured to instruct the terminal not to send the first report.

In some embodiments, in the network device, in a case where the cell activation command includes the second information, N bits in the cell activation command are configured to indicate the second information, where each bit corresponds to a cell index and is configured to instruct the terminal whether it needs to send the first report for the cell corresponding to the cell index. N is an integer greater than or equal to 1.

In some embodiments, in the network device, in a case where the cell activation command includes the second information, the cell activation command includes a cell index and a preset bit corresponding to the cell index. The preset bit is configured to indicate the second information, and the second information is configured to instruct that for the cell corresponding to the cell index, the terminal needs to send the first report or does not need to send the first report.

In some embodiments, in the network device, in a case where the first command includes the second information, the second information includes a cell index for sending the first report and/or first report sending indication information.

In some embodiments, in the network device, the transceiver 410 is further configured to perform:
receiving third information and/or fourth information sent by the terminal;
where the third information includes one or more of the following:
   the terminal supports SCell activation time reduction; and
   the terminal performs SCell activation time reduction;
where the fourth information includes one or more of the following:
   information indicating that the terminal has a measurement result; and
   cell identity.

In some embodiments, in the network device, the transceiver 410 receiving the first report sent by the terminal includes:
receiving the first report sent by the terminal to the network device when a first condition is met; where the first condition includes one or more of the following:
measurement performed within a first time period before receiving the cell activation command;
measurement performed within a second time period after receiving the cell activation command;
measurement performed within a third time period before sending a Channel State Information (CSI) report;
the measurement meets an accuracy requirement; and
the measurement meets a measurement period.

In some embodiments, in the network device, the first information includes one or more of the following:
the terminal supports a factor less than 8;
the terminal supports a factor less than 8 for cell detection;
the terminal supports a factor less than 8 for L1 measurement;
a first value, where the first value indicates the value of the factor for cell detection; and
a second value, where the second value indicates the value of the factor for L1 measurement.

In some embodiments, the network device includes a processor 420, the processor 420 configured to:
determine that the terminal does not support SCell activation time reduction and that the terminal needs to perform L3 measurement and L1 measurement and/or to stop waiting for the first report, in a case where a second condition is met; where the second condition includes one or more of the following:
the first report sent by the terminal is not received on configured uplink resources;
the first report sent by the terminal is not received within a first timer; and
the first report sent by the terminal is not received on configured uplink resources within the first timer.

In some embodiments, in the network device, the transceiver 410 receiving the first report sent by the terminal includes:
receiving the first report sent by the terminal within a first time after the cell activation command; or
receiving the first report sent by the terminal within a second time after receiving the second information.

In some embodiments, in the network device, the measurement result is valid when the following conditions are met:
a measurement period for a deactivated cell, and/or
an accuracy requirement.

In some embodiments, in the network device, the first report includes at least one of the following:
indication information indicating that there is a measurement result;
indication that the measurement result is valid;
indication that the measurement result is invalid; and
indication that there is no measurement result.

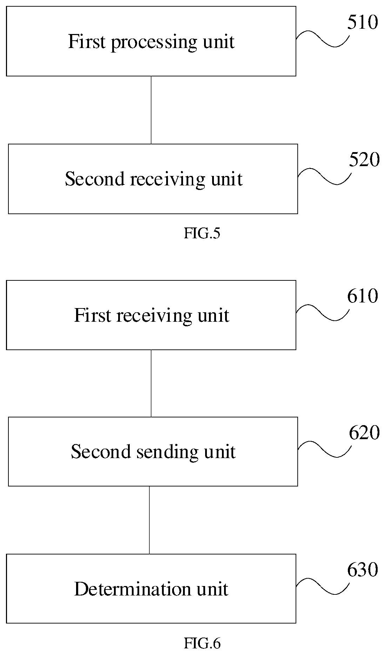

Some embodiments of the present disclosure further provide a transmission apparatus, applied to a terminal, as shown in FIG. 5, the apparatus including:
a first processing unit 510, configured to:
after a cell activation command, send a first report to a network; and/or send first information to the network, where the first information is related to beam; and/or determine a first time, where the first time is related to cell activation.

In some embodiments, in the transmission apparatus, the first report includes a SCell measurement report.

In some embodiments, the transmission apparatus further includes:
a second receiving unit 520, configured to:
receive second information sent by the network;
where the second information is configured to instruct the terminal to send the first report after receiving the cell activation command; or, the second information is configured to instruct the terminal not to send the first report after receiving the cell activation command; or, the second information is configured to trigger the terminal to send the first report.

In some embodiments, in the transmission apparatus, the first report includes one or more of measurement results, a beam index, and a cell index.

In some embodiments, in the transmission apparatus, the second receiving unit 520 receiving the second information sent by the network includes one of the following:
receiving a cell activation command sent by the network, where the cell activation command is the second information;
receiving a cell activation command sent by the network, where the cell activation command includes the second information; and
receiving a first command sent by the network before or after sending the cell activation command, where the first command includes the second information.

In some embodiments, in the transmission apparatus, when the cell activation command is the second information, the cell activation command is configured to instruct the terminal to send the first report after receiving the cell activation command.

In some embodiments, in the transmission apparatus, in a case where the cell activation command includes the second information, a preset bit in the cell activation command is configured to indicate the second information. When the second information is a first value, it is configured to instruct the terminal to send the first report; and/or when the second information is a second value, it is configured to instruct the terminal not to send the first report.

In some embodiments, in the transmission apparatus, in a case where the cell activation command includes the second information, N bits in the cell activation command are configured to indicate the second information, where each bit corresponds to a cell index and is configured to instruct the terminal whether it needs to send the first report for the cell corresponding to the cell index. N is an integer greater than or equal to 1.

In some embodiments, in the transmission apparatus, in a case where the cell activation command includes the second information, the cell activation command includes a cell index and a preset bit corresponding to the cell index. The preset bit is configured to indicate the second information, and the second information is configured to instruct that for the cell corresponding to the cell index, the terminal needs to send the first report or does not need to send the first report.

In some embodiments, in the transmission apparatus, in a case where the first command includes the second information, the second information includes a cell index for sending the first report and/or first report sending indication information.

In some embodiments, in the transmission apparatus, the first processing unit 510 is further configured to:
send third information and/or fourth information to the network;
where the third information includes one or more of the following:
   the terminal supports SCell activation time reduction; and
   the terminal performs SCell activation time reduction;
where the fourth information includes one or more of the following:
   information indicating that the terminal has a measurement result; and
   cell identity.

In some embodiments, in the transmission apparatus, the first processing unit 510 sending the first report to the network includes:
sending the first report to the network when a first condition is met; where the first condition includes one or more of the following:
measurement performed within a first time period before receiving the cell activation command;
measurement performed within a second time period after receiving the cell activation command;
measurement performed within a third time period before sending a Channel State Information (CSI) report;
the measurement meets an accuracy requirement; and
the measurement meets a measurement period.

In some embodiments, in the transmission apparatus, the first information includes one or more of the following:
the terminal supports a factor less than 8;
the terminal supports a factor less than 8 for cell detection;
the terminal supports a factor less than 8 for L1 measurement;
a first value, where the first value indicates the value of the factor for cell detection; and
a second value, where the second value indicates the value of the factor for L1 measurement.

In some embodiments, in the transmission apparatus, the SCell activation time or delay of the terminal includes at least: 3 ms and/or a time period between an activation command and the command for Transmission Configuration Indicator (TCI).

In some embodiments, in the transmission apparatus, the SCell activation time of the terminal includes at least one of the following:
the factor, or the first value, or the second value multiplied by a Synchronization Signal/Physical Broadcast Channel (SS/PBCH) Block-based Measurement Timing Configuration (SMTC);
the factor, or the first value, or the second value multiplied by Synchronization Signal/Physical Broadcast Channel (SS/PBCH) Block (SSB) periodicity; and
the factor, or the first value, or the second value multiplied by N; where the value of N is 1 or 3.

In some embodiments, in the transmission apparatus, the first processing unit 510 sending the first report to the network includes:
sending the first report to the network within a first time after receiving the cell activation command; or,
sending the first report to the network within a second time after receiving the second information.

In some embodiments, the transmission apparatus, where the first time includes at least one of the following:
3 ms;
6 ms;
a time period between the activation command and the command for Transmission Configuration Indicator (TCI);
SMTC multiplied by A, where A is an integer less than 8;
SSB periodicity multiplied by B, where B is an integer less than 8;
C multiplied by N multiplied by SMTC;
C multiplied by N multiplied by SSB periodicity; and
C multiplied by N multiplied by CSI-RS periodicity;
where the value of N is 1 or 3, and C is an integer less than 8.

In some embodiments, in the transmission apparatus, the measurement result is valid when the following conditions are met:
a measurement period for a deactivated cell, and/or
an accuracy requirement.

In some embodiments, in the transmission apparatus, the first report includes at least one of the following:
indication information indicating that there is a measurement result;
indication that the measurement result is valid;
indication that the measurement result is invalid; and
indication that there is no measurement result.

Some embodiments of the present disclosure further provide a transmission apparatus, applied to a network device, as shown in FIG. 6, the apparatus including:
a first receiving unit 610, configured to:
receive a first report sent by a terminal after a cell activation command and/or receive first information sent by the terminal; where the first information is related to beam.

In some embodiments, in the transmission apparatus, the first report includes a SCell measurement report.

In some embodiments, in the transmission apparatus, the apparatus further includes:
a second sending unit 620, configured to:
send second information to the terminal;
where the second information is configured to instruct the terminal to send the first report after receiving the cell activation command; or, the second information is configured to instruct the terminal not to send the first report after receiving the cell activation command; or, the second information is configured to trigger the terminal to send the first report.

In some embodiments, in the transmission apparatus, the first report includes one or more of measurement results, a beam index, and a cell index.

In some embodiments, in the transmission apparatus, the second sending unit 620 sending the second information to the terminal includes one of the following:
sending a cell activation command to the terminal, where the cell activation command is the second information;
sending a cell activation command to the terminal, where the cell activation command includes the second information; and
sending a first command to the terminal before or after sending the cell activation command, where the first command includes the second information.

In some embodiments, in the transmission apparatus, when the cell activation command is the second information, the cell activation command is configured to instruct the terminal to send a measurement report after receiving the cell activation command.

In some embodiments, in the transmission apparatus, in a case where the cell activation command includes the second information, a preset bit in the cell activation command is configured to indicate the second information, and when the second information is a first value, it is configured to instruct the terminal to send the first report; and/or when the second information is a second value, it is configured to instruct the terminal not to send the first report.

In some embodiments, in the transmission apparatus, in a case where the cell activation command includes the second information, N bits in the cell activation command are configured to indicate the second information, where each bit corresponds to a cell index and is configured to instruct the terminal whether it needs to send the first report for the cell corresponding to the cell index. N is an integer greater than or equal to 1.

In some embodiments, in the transmission apparatus, in a case where the cell activation command includes the second information, the cell activation command includes a cell index and a preset bit corresponding to the cell index. The preset bit is configured to indicate the second information, and the second information is configured to instruct that for the cell corresponding to the cell index, the terminal needs to send the first report or does not need to send the first report.

In some embodiments, in the transmission apparatus, in a case where the first command includes the second information, the second information includes a cell index for sending the first report and/or first report sending indication information.

In some embodiments, in the transmission apparatus, the first receiving unit 610 is further configured to:
receive third information and/or fourth information sent by the terminal;
where the third information includes one or more of the following:
   the terminal supports SCell activation time reduction; and
   the terminal performs SCell activation time reduction;
where the fourth information includes one or more of the following:
   information indicating that the terminal has a measurement result; and
   cell identity.

In some embodiments, in the transmission apparatus, the first receiving unit 610 receiving the first report sent by the terminal includes:
receiving the first report sent by the terminal to the network device when a first condition is met; where the first condition includes one or more of the following:
measurement performed within a first time period before receiving the cell activation command;
measurement performed within a second time period after receiving the cell activation command;
measurement performed within a third time period before sending a Channel State Information (CSI) report;
the measurement meets an accuracy requirement; and
the measurement meets a measurement period.

In some embodiments, in the transmission apparatus, the first information includes one or more of the following:
the terminal supports a factor less than 8;
the terminal supports a factor less than 8 for cell detection;
the terminal supports a factor less than 8 for L1 measurement;
a first value, where the first value indicates the value of the factor for cell detection; and
a second value, where the second value indicates the value of the factor for L1 measurement.

In some embodiments, the transmission apparatus further includes:
a determination unit 630, configured to:
determine that the terminal does not support SCell activation time reduction and that the terminal needs to perform L3 measurement and L1 measurement and/or to stop waiting for the first report, in a case where a second condition is met; where the second condition includes one or more of the following:
the first report sent by the terminal is not received on configured uplink resources;
the first report sent by the terminal is not received within a first timer; and
the first report sent by the terminal is not received on configured uplink resources within the first timer.

In some embodiments, in the transmission apparatus, the first receiving unit 610 receiving the first report sent by the terminal includes:
receiving the first report sent by the terminal within a first time after the cell activation command; or
receiving the first report sent by the terminal within a second time after receiving the second information.

In some embodiments, in the transmission apparatus, the measurement result is valid when the following conditions are met:
a measurement period for a deactivated cell, and/or
an accuracy requirement.

In some embodiments, in the transmission apparatus, the first report includes at least one of the following:
indication information indicating that there is a measurement result;
indication that the measurement result is valid;
indication that the measurement result is invalid; and
indication that there is no measurement result.

Some embodiments of the present disclosure further provide a terminal, including a processor, a memory, and a program stored on the memory and executable on the processor, where the program, when executed by the processor, implements the transmission method according to any one of the above.

For the specific implementation of the transmission method executed by the program running on the processor of the terminal, reference may be made to the detailed description when the transmission method is applied to the terminal, which will not be repeated here.

Some embodiments of the present disclosure further provide a network device, including a processor, a memory, and a program stored on the memory and executable on the processor, where the program, when executed by the processor, implements the transmission method according to any one of the above.

For the specific implementation of the transmission method executed by the program running on the processor of the network device, reference may be made to the detailed description when the transmission method is applied to the network device, which will not be repeated here.

Additionally, some embodiments of the present disclosure further provide a readable storage medium, having a computer program stored thereon, where the program, when executed by a processor, implements the transmission method according to any one of the above.

Specifically, the readable storage medium is applied to the aforementioned terminal or network device. When applied to the terminal or network device, the execution operations in the corresponding cell activation method are as described in detail above, and will not be repeated here.

In the several embodiments provided by the present disclosure, it should be understood that the disclosed method and apparatus may be implemented in other ways. For example, the apparatus embodiments described above are merely illustrative. For example, the division of units is only a logical function division; in actual implementation, there may be other divisions, for example, multiple units or components may be combined or integrated into another system, or some features may be ignored or not executed. Additionally, the mutual coupling or direct coupling or communication connection shown or discussed may be an indirect coupling or communication connection through some interfaces, apparatus, or units, which may be electrical, mechanical, or otherwise.

Furthermore, the functional units in the various embodiments of the present disclosure may be integrated into one processing unit, or each unit may exist alone physically, or two or more units may be integrated into one unit. The above integrated unit may be implemented in the form of hardware or hardware plus software functional units.

The integrated unit implemented in the form of a software functional unit as described above may be stored in a computer-readable storage medium. The software functional unit is stored in a storage medium and includes instructions for causing a computer device (which may be a personal computer, server, network device, etc.) to perform some of the steps of the transmission and reception methods described in the various embodiments of the present disclosure. The foregoing storage medium includes: U disk, mobile hard disk, Read-Only Memory (ROM), Random Access Memory (RAM), magnetic disk, optical disk, and other media that can store program code.

The above are only some embodiments of the present disclosure, and it should be noted that for those skilled in the art, without departing from the principles of the present disclosure, several improvements and modifications may be made, which should also be regarded as the scope of the present disclosure.

## Claims

1. A transmission method, applied to a terminal and comprising:
after a cell activation command, sending a first report to a network; and/or
sending first information to the network, wherein the first information is related to beam; and/or
determining a first time, wherein the first time is related to cell activation.

2. The method according to claim 1, wherein the first report comprises a SCell measurement report.

3. The method according to claim 1 or 2, further comprising:
receiving second information sent by the network;
wherein the second information is configured to instruct the terminal to send the first report after receiving the cell activation command; or, the second information is configured to instruct the terminal not to send the first report after receiving the cell activation command; or, the second information is configured to trigger the terminal to send the first report.

4. The method according to claim 1 or 2, wherein the first report comprises one or more of measurement results, a beam index, and a cell index.

5. The method according to claim 3, wherein the receiving second information sent by the network comprises one of the following:
receiving the cell activation command sent by the network, wherein the cell activation command is the second information;
receiving the cell activation command sent by the network, wherein the cell activation command comprises the second information; and
receiving a first command sent by the network before or after the network sends the cell activation command, wherein the first command comprises the second information.

6. The method according to claim 5, wherein, in a case where the cell activation command is the second information, the cell activation command is configured to instruct the terminal to send the first report after receiving the cell activation command.

7. The method according to claim 5, wherein, in a case where the cell activation command comprises the second information, a preset bit in the cell activation command is configured to indicate the second information, and
in a case where the second information is a first value, the second information is configured to instruct the terminal to send the first report; and/or
in a case where the second information is a second value, the second information is configured to instruct the terminal not to send the first report.

8. The method according to claim 5, wherein, in a case where the cell activation command comprises the second information, N bits in the cell activation command are configured to indicate the second information; each bit corresponds to a cell index and is configured to instruct the terminal whether the terminal needs to send the first report for a cell corresponding to the cell index; wherein N is an integer greater than or equal to 1.

9. The method according to claim 5, wherein, in a case where the cell activation command comprises the second information, the cell activation command comprises a cell index and a preset bit corresponding to the cell index; the preset bit is configured to indicate the second information, and the second information is configured to instruct that the terminal needs to send the first report or does not need to send the first report for a cell corresponding to the cell index.

10. The method according to claim 5, wherein, in a case where the first command comprises the second information, the second information comprises a cell index for sending the first report and/or first report sending indication information.

11. The method according to claim 1, further comprising:
sending third information and/or fourth information to the network;
wherein the third information comprises one or more of the following:
the terminal supports SCell activation time reduction; and
the terminal performs the SCell activation time reduction;
wherein the fourth information comprises one or more of the following:
information indicating that the terminal has a measurement result; and
a cell identifier.

12. The method according to claim 1, wherein the sending the first report to the network comprises:
sending the first report to the network in a case where a first condition is satisfied; wherein the first condition comprises one or more of the following:
measurement performed within a first time period before receiving the cell activation command;
measurement performed within a second time period after receiving the cell activation command;
measurement performed within a third time period before sending a Channel State Information (CSI) report;
measurement satisfies an accuracy requirement; and
measurement satisfies a measurement period.

13. The method according to claim 1, wherein the first information comprises one or more of the following:
the terminal supports a factor less than 8;
the terminal supports a factor less than 8 for cell detection;
the terminal supports a factor less than 8 for L1 measurement;
a first value, wherein the first value indicates the value of a factor for cell detection; and
a second value, wherein the second value indicates the value of a factor for L1 measurement.

14. The method according to claim 1, wherein, after the sending the first report, a SCell activation time of the terminal comprises at least: 3 ms and/or a time period between an activation command and the command for Transmission Configuration Indicator (TCI).

15. The method according to claim 13, wherein a SCell activation time of the terminal comprises at least one of the following:
the factor, or the first value, or the second value, multiplied by a Synchronization Signal/Physical Broadcast Channel (SS/PBCH) Block-based Measurement Timing Configuration (SMTC);
the factor, or the first value, or the second value, multiplied by SS/PBCH Block (SSB) periodicity; and
the factor, or the first value, or the second value, multiplied by N, wherein a value of N is 1 or 3.

16. The method according to claim 1 or 3, wherein the sending the first report to the network comprises:
the terminal sending the first report to the network within a first time after receiving the cell activation command; or
the terminal sending the first report to the network within a second time after receiving the second information.

17. The method according to claim 1, wherein the first time comprises at least one of the following:
3 ms;
6 ms;
a time period between the activation command and the command for Transmission Configuration Indicator (TCI);
Synchronization Signal/Physical Broadcast Channel (SS/PBCH) Block-based Measurement Timing Configuration (SMTC) multiplied by A, wherein A is an integer less than 8;
SS/PBCH Block (SSB) periodicity multiplied by B, wherein B is an integer less than 8;
C multiplied by N multiplied by SMTC;
C multiplied by N multiplied by the SSB periodicity; and
C multiplied by N multiplied by Channel State Information (CSI) reference signal (RS) periodicity; wherein a value of N is 1 or 3, and C is an integer less than 8.

18. The method according to claim 4, wherein the measurement result is valid in a case where the following conditions are satisfied:
a measurement period for a deactivated cell, and/or
an accuracy requirement.

19. The method according to claim 1 or 2, wherein the first report comprises at least one of the following:
indication information indicating that there is a measurement result;
an indication that the measurement result is valid;
an indication that the measurement result is invalid; and
an indication that there is no measurement result.

20. A transmission method, applied to a network device and comprising:
receiving a first report sent by a terminal after a cell activation command and/or receiving first information sent by the terminal; wherein the first information is related to beam.

21. The method according to claim 20, wherein the first report comprises a SCell measurement report.

22. The method according to claim 20 or 21, further comprising:
sending second information to the terminal;
wherein the second information is configured to instruct the terminal to send the first report after receiving the cell activation command; or, the second information is configured to instruct the terminal not to send the first report after receiving the cell activation command; or, the second information is configured to trigger the terminal to send the first report.

23. The method according to claim 20 or 21, wherein the first report comprises one or more of measurement results, a beam index, and a cell index.

24. The method according to claim 22, wherein the sending second information to the terminal comprises one of the following:
sending the cell activation command to the terminal, wherein the cell activation command is the second information;
sending the cell activation command to the terminal, wherein the cell activation command comprises the second information; and
sending a first command to the terminal before or after sending the cell activation command, wherein the first command comprises the second information.

25. The method according to claim 24, wherein, in a case where the cell activation command is the second information, the cell activation command is configured to instruct the terminal to send a measurement report after receiving the cell activation command.

26. The method according to claim 24, wherein, in a case where the cell activation command comprises the second information, a preset bit in the cell activation command is configured to indicate the second information, and
in a case where the second information is a first value, the second information is configured to instruct the terminal to send the first report; and/or
in a case where the second information is a second value, the second information is configured to instruct the terminal not to send the first report.

27. The method according to claim 24, wherein, in a case where the cell activation command comprises the second information, N bits in the cell activation command are configured to indicate the second information; each bit corresponds to a cell index and is configured to instruct the terminal whether the terminal needs to send the first report for a cell corresponding to the cell index; wherein N is an integer greater than or equal to 1.

28. The method according to claim 24, wherein, in a case where the cell activation command comprises the second information, the cell activation command comprises a cell index and a preset bit corresponding to the cell index; the preset bit is configured to indicate the second information, and the second information is configured to instruct that the terminal needs to send the first report or does not need to send the first report for a cell corresponding to the cell index.

29. The method according to claim 24, wherein, in a case where the first command comprises the second information, the second information comprises a cell index for sending the first report and/or first report sending indication information.

30. The method according to claim 20, further comprising:
receiving third information and/or fourth information sent by the terminal;
wherein the third information comprises one or more of the following:
the terminal supports SCell activation time reduction; and
the terminal performs the SCell activation time reduction;
wherein the fourth information comprises one or more of the following:
information indicating that the terminal has a measurement result; and
a cell identifier.

31. The transmission method according to claim 20, wherein the receiving the first report sent by the terminal comprises:
receiving the first report sent by the terminal to the network device in a case where a first condition is satisfied, wherein the first condition comprises one or more of the following:
measurement performed within a first time period before receiving the cell activation command;
measurement performed within a second time period after receiving the cell activation command;
measurement performed within a third time period before sending a Channel State Information (CSI) report;
measurement satisfies an accuracy requirement; and
measurement satisfies a measurement period.

32. The transmission method according to claim 20, wherein the first information comprises one or more of the following:
the terminal supports a factor less than 8;
the terminal supports a factor less than 8 for cell detection;
the terminal supports a factor less than 8 for L1 measurement;
a first value, wherein the first value indicates the value of a factor for cell detection; and
a second value, wherein the second value indicates the value of a factor for L1 measurement.

33. The transmission method according to claim 20, further comprising:
in a case where a second condition is met, determining that the terminal does not support SCell activation time reduction and that the terminal needs to perform L3 measurement and L1 measurement and/or to stop waiting for the first report;
wherein the second condition comprises one or more of the following:
that the first report sent by the terminal is not received on configured uplink resources;
that the first report sent by the terminal is not received within a first timer; and
that the first report sent by the terminal is not received on configured uplink resources within a first timer.

34. The method according to claim 20 or 22, wherein the receiving the first report sent by the terminal comprises:
receiving the first report sent by the terminal within a first time after the cell activation command; or
receiving the first report sent by the terminal within a second time after receiving second information.

35. The method according to claim 23, wherein the measurement result is valid in a case where the following conditions are satisfied:
a measurement period for a deactivated cell, and/or
an accuracy requirement.

36. The method according to claim 20 or 21, wherein the first report comprises at least one of the following:
indication information indicating that there is a measurement result;
an indication that the measurement result is valid;
an indication that the measurement result is invalid; and
an indication that there is no measurement result.

37. A terminal, comprising a processor; wherein the processor is configured to perform:
after a cell activation command, sending a first report to a network; and/or
sending first information to the network, wherein the first information is related to beam; and/or
determining a first time, wherein the first time is related to cell activation.

38. A network device, comprising a transceiver; wherein the transceiver is configured to:
receive a first report sent by a terminal after a cell activation command and/or receive first information sent by a terminal, wherein the first information is related to beam.

39. A transmission apparatus, applied to a terminal, the apparatus comprising:
a first processing unit, configured to:
after a cell activation command, send a first report to a network; and/or send first information to the network, wherein the first information is related to beam; and/or determine a first time, wherein the first time is related to cell activation.

40. A transmission apparatus, applied to a network device, the apparatus comprising:
a first receiving unit, configured to:
receive a first report sent by a terminal after a cell activation command and/or receive first information sent by a terminal, wherein the first information is related to beam.

41. A terminal, comprising a processor, a memory, and a program stored in the memory and executable on the processor; wherein the program, when executed by the processor, is configured to implement the transmission method according to any one of claims 1 to 19.

42. A network device, comprising a processor, a memory, and a program stored in the memory and executable on the processor; wherein the program, when executed by the processor, is configured to implement the transmission method according to any one of claims 20 to 36.

43. A readable storage medium, storing a program; wherein the program, when executed by a processor, is configured to implement the transmission method according to any one of claims 1 to 19, or implement the transmission method according to any one of claims 20 to 36.
